# EUROPEAN PATENT APPLICATION

(11) **EP 4 400 190 A1**
(43) Date of publication of application: **17.07.2024**
(21) Application number: 23161892.7
(22) Date of filing: 14.03.2023
(51) Int. Cl.: B01D 19/00, C08F 6/00

(54) **A DEVOLATILIZATION APPARATUS COMPRISING A HOLLOW DOUBLE-PLATE ASSEMBLY**

(30) Priority: 12.01.2023 WO PCT/CN2023/000006
(71) Applicant: Sulzer Management AG, 8401 Winterthur (CH)
(72) Inventor: The designation of the inventor has not yet been filed
(74) Representative: Henkel & Partner mbB

(57) **Abstract**

The present invention relates to a devolatilization apparatus for devolatilizing a composition comprising a volatile component, such as for devolatilizing a solid or liquid polymer composition comprising non-reacted monomer, solvent and/or by-product, wherein the devolatilization apparatus comprises a vessel comprising at least one inlet for the composition to be devolatilized, at least one outlet for devolatilized composition, at least one outlet for gas, at least one heatable tray and optionally at least one heatable distributor, wherein at least a section of at least one heatable tray and/or of at least one heatable distributor comprises a hollow double-plate assembly comprising an upper plate and a lower plate being arranged on top of each other, but spaced apart so that a void chamber is defined therebetween, wherein each of both plates comprises a plurality of openings, wherein each opening of the upper plate is surrounded by a wall extending through the void chamber and surrounding an opening of the lower plate so as to form a plurality of channels being fluid-tightly separated from the hollow space being defined in the void chamber between the channels, wherein the hollow space is connected with an inlet for heat medium and with an outlet for heat medium.

## Description

The present invention relates to a devolatilization apparatus for devolatilizing a composition comprising a volatile component, such as for devolatilizing a solid or liquid polymer composition comprising non-reacted monomer and solvent, as well as to a devolatilization process making use of such a devolatilization apparatus.

Devolatilization or degassing, respectively, denotes the controlled removal of gases and of other volatile substances, such as solvents or moisture, from solids and liquids. Devolatilization is commonly used to remove volatile components, which are mostly components having a comparable low molecular weight, such as residual monomers, solvents, reaction by-products and water, from polymers. This is necessary, in order to achieve a required purity of the respective polymer before its use by removing harmful and/or toxic components, by removing components negatively affecting the further processing of the polymer, such as its formability to articles, by removing components worsening the properties of the polymer, by removing components leading to an unpleasant smell of the polymer and/or by removing components being undesired for other reasons. Furthermore, the removal of monomers and solvent from a polymer composition allows to recover and potentially recycle the monomers and solvent in the process so as to increase the yield of the process as well as to reduce the quantity of waste.

In order to achieve a devolatilization, the component to be evaporated needs to have a higher partial pressure or higher thermodynamic activity, respectively, than the polymer. Moreover, the component to be evaporated needs to be able to diffuse through the polymer composition to the phase boundary. In particular in case of viscous polymers or polymer melts - and typically polymers and polymer melts are comparable viscous - the slow diffusion rate may be a speed limiting factor. Therefore, in order to accelerate the devolatilization, the composition being subjected to the devolatilization is usually devolatilized at an elevated temperature and/or devolatilized at a subatmospheric pressure, because both measurements increase the thermodynamic activity of the volatile component(s) and an increase of the temperature moreover decreases the viscosity of the polymer, thus improving the diffusion of the volatile component(s) within the polymer. However, most of the polymers are - more or less - heat sensitive so that a certain temperature, which is characteristic for each polymer, shall not be exceeded, in order to reliably avoid a polymer degradation during the devolatilization. Thus, temperature control of the composition to be devolatilized during the devolatilization is an important and in fact decisive factor.

Several types of devolatilization apparatuses are known, such as static and dynamic devolatilization apparatuses. While a dynamic devolatilization apparatus comprises moving parts, such as blades, in order to maintain a high interfacial concentration gradient and in order to maintain a high diffusion rate of the volatile component(s) within the polymer, a static devolatilization apparatus does not comprise moving parts, but comprises internals so as to create a high specific surface of the composition to be devolatilized. However, dynamic devolatilization apparatuses are, on account of their moving parts, connected with drastic disadvantages, such as being costly, requiring during the operation a high amount of energy, requiring regular maintenance and having a comparable high leak rate.

Thus, static devolatilization apparatuses have in comparison to dynamic devolatilization apparatuses the advantages - due to the absence of moving parts - of less energy consumption, of less installation costs, of requiring less maintenance and of having a comparable low leak rate. Common types of static devolatilization apparatuses are flash devolatilization apparatuses and falling strand devolatilization apparatuses. Flash devolatilization apparatuses typically comprise a preheater, for example a heat exchanger, and a flash chamber. During the operation, the polymer composition to be devolatilized is firstly pumped to the heat exchanger, where it is heated up and optionally pressurized in order to decrease its viscosity, before it is then pumped from the heat exchanger into the top of the flash chamber, where the pressure is relieved and evaporation of the volatile component(s) occurs. Thereafter, the polymer composition falls downwardly through the flash chamber, during which a plurality of bubbles of the volatile component(s) is nucleated in the polymer composition. This results in a large amount of surface area for mass transfer and thus leads to a fast devolatilization. While the volatilized vapor phase is collected and condensed in a condenser, the residual polymer composition collects at the bottom of the flash chamber and is removed via pumping. Falling strand devolatilization apparatuses operate similarly to flash devolatilization apparatuses, but have specially embodied nozzles in order to inject the polymer composition into the chamber as falling strands, in order to promote the growth of bubbles of the volatile component(s) and in order to accelerate the diffusion process.

As indicated above, the temperature control of the composition to be devolatilized during the devolatilization is an important and in fact decisive factor. This is all the more important in cases, in which temperature sensitive compositions, such as temperature sensitive polymer compositions, are to be devolatilized. For instance, a flash devolatilization apparatus may not operate at an optimal temperature, when the polymer of the composition to be devolatilized is highly temperature sensitive and can therefore be not heated up to the optimal temperature in the preheater, or when the preheater is not able to reach the required outlet temperature due to an inaccurate design basis, or when the devolatilization apparatus is embodied so as to have a high heat loss to the environment, or when an inaccurate simulation due to lack of thermodynamic data has been made before designing the devolatilization apparatus. However, a non-optimal temperature control of the composition to be devolatilized during the devolatilization leads to non-optimal devolatilization results. For example, a lower operational temperature than the optimal operational temperature during the devolatilization results in that comparable low amounts of the volatile component(s) contained in the polymer composition are separated from the polymer, in that the devolatilized polymer product being discharged from devolatilization apparatus at a lower than the optimal designed temperature may cause in downstream equipment an abnormal operation and/or in that the intended property of the devolatilized polymer product is not achieved after the devolatilization process.

In view of this, the object underlying the present invention is to provide a devolatilization apparatus for devolatilizing a composition comprising a volatile component, such as for devolatilizing a solid or liquid polymer composition comprising non-reacted monomer, solvent and/or by-product, which allows to compensate heat loss due to the evaporation of volatile components and to reliably control the devolatilization operating temperature during the operation of the devolatilization apparatus and in particular to individually and reliably control the devolatilization operating temperature in different sections of the devolatilization apparatus, so that the devolatilization apparatus achieves an optimal devolatilization of the composition to be devolatilized at low operational costs, wherein the devolatilization apparatus is characterized by low capital expenditures, so that a devolatilized composition with an optimal product quality is obtained even in a case that the composition to be devolatilized is a polymer composition comprising a particular temperature sensitive polymer.

In accordance with the present invention, this object is satisfied by providing a devolatilization apparatus for devolatilizing a composition comprising a volatile component, such as for devolatilizing a solid or liquid polymer composition comprising non-reacted monomer, solvent and/or by-product, wherein the devolatilization apparatus comprises a vessel comprising at least one inlet for the composition to be devolatilized, at least one outlet for devolatilized composition, at least one outlet for gas, at least one heatable tray and optionally at least one heatable distributor, wherein at least a section of at least one heatable tray and/or of at least one heatable distributor comprises a hollow double-plate assembly comprising an upper plate and a lower plate being arranged on top of each other, but spaced apart so that a void chamber is defined therebetween, wherein each of both plates comprises a plurality of openings, wherein each opening of the upper plate is surrounded by a wall extending through the void chamber and surrounding an opening of the lower plate so as to form a plurality of channels being fluid-tightly separated from the hollow space being defined in the void chamber between the channels, wherein the hollow space is connected with an inlet for heat medium and with an outlet for heat medium.

This solution bases on the finding that such a devolatilization apparatus, such as in particular a static devolatilization apparatus, for devolatilizing a composition comprising a volatile component, such as for devolatilizing a solid or liquid polymer composition comprising non-reacted monomer, solvent and/or by-product, in which at least a section of at least one heatable tray and/or of at least one heatable distributor comprises a hollow double-plate assembly comprising an upper plate and a lower plate being arranged on top of each other, but spaced apart so that a void chamber is defined therebetween, wherein each of both plates comprises a plurality of openings, wherein each opening of the upper plate is surrounded by a wall extending through the void chamber and surrounding an opening of the lower plate so as to form a plurality of channels fluidly connecting the upper and the lower plates so as to allow falling strands - which are generated from the composition flowing from the upper plate through the channels downwardly - to fall from the lower side of the lower plate downwardly, wherein the channels are fluid-tightly separated from the hollow space being defined in the void chamber between the channels, wherein the hollow space is connected with an inlet for heat medium and with an outlet for heat medium, allows to reliably control the devolatilization operating temperature during the operation of the devolatilization apparatus and in particular to individually and reliably control the devolatilization operating temperature in different sections of the devolatilization apparatus. More specifically, the composition to be devolatilized, such as a composition containing a temperature-sensitive polymer, enters through one or more heatable distributor(s) comprising a hollow double-plate assembly being precisely temperature controllable and/or falls onto one or more heatable tray(s) comprising a hollow double-plate assembly being precisely temperature controllable on account of the hollow space of the void chamber through which heat medium being adjusted to an appropriate and optimal temperature flows, so that not only the upper plate is precisely temperature controlled by the heat medium flowing below the lower side of the upper plate through the hollow space and not only the lower plate is precisely temperature controlled by the heat medium flowing above the upper side of the lower plate, but also and in particular all the channels, through which the composition to be devolatilized flows downwardly through the hollow double-plate assembly, are precisely temperature controlled. Thus, already in the distributor a high amount of the volatile component(s) is evaporated from the composition to be devolatilized, before the composition to be devolatilized falls downwards onto one or more heated tray(s), where it is precisely heated while being held up on the tray, then flows through the channels of the tray and forms at the lower side of the lower plate falling strands falling downwardly onto the next lower tray. Thereby, volatile component(s) efficiently sperate from the polymer of the composition to be devolatilized. Since each of the distributor(s) and each of the tray(s) may be individually and precisely temperature controlled by appropriately adjusting the temperature of the heat medium transported through the hollow space of the void chamber of the respective distributor or tray, the devolatilization apparatus in accordance with the present invention allows to reliably control the devolatilization operating temperature during the operation of the devolatilization apparatus and in particular to individually and reliably control the devolatilization operating temperature in different sections of the devolatilization apparatus. This allows not only to devolatilize a composition containing a temperature-sensitive polymer, but also to devolatilize a composition containing a mixture of thermally sensitive volatile components and of non-thermally sensitive volatile components. For instance, the hollow double-plate assemblies of the trays installed in the upper section of the vessel may be adjusted to a comparable low temperature so as to remove thermal sensitive volatile components, whereas the hollow double-plate assemblies of the trays installed in the lower section of the vessel may be adjusted to a comparable high temperature so as to remove thermally non-sensitive volatile components. Furthermore, the devolatilization apparatus in accordance with the present invention allows - on account of the one or more heatable trays and optionally heatable distributors, each of which comprising a hollow double-plate assembly - to compensate the heat loss and temperature drop inside the vessel, which is caused by the evaporation of volatile components. Consequently, the devolatilization apparatus achieves an optimal devolatilization of the composition to be devolatilized at low operational costs, wherein the devolatilization apparatus is characterized by low capital expenditures, so that a devolatilized composition with an optimal product quality is obtained even in a case that the composition to be devolatilized is a polymer composition comprising a particular temperature sensitive polymer. Another advantage of the devolatilization apparatus in accordance with the present invention is that the trays may be fixed - due to the hollow double-plate assemblies, from which they are composed - in one removable cartridge, thereby allowing to easily remove the trays for maintenance and/or cleaning, if necessary, and afterwards install them back in the devolatilization apparatus, or to easily replace the trays by other trays, before the devolatilization apparatus is used for a different devolatilization application.

In accordance with the present invention, at least a section of at least one heatable tray and/or of at least one heatable distributor comprises a hollow double-plate assembly. Preferably, the whole of at least one heatable tray and/or of at least one heatable distributor, seen in the horizontal plane, comprises a hollow double-plate assembly.

Furthermore, the plurality of channels is fluid-tightly separated from the hollow space being defined in the void chamber between the channels. Thereby, it is meant in accordance with the present invention that fluid, i.e. composition to be devolatilized, flowing through the channels from the upper to the lower plate cannot enter the hollow space, in which the heat medium flows, and that heat medium flowing in the hollow space cannot enter the channels. Plurality of channels means in this connection two or more, preferably five or more and more preferably ten or more channels.

In accordance with the present invention, the hollow double-plate assembly comprises an upper plate and a lower plate being arranged on top of each other. This means that in addition to the upper plate and the lower plate, baffles and/or weirs and/or side walls may be arranged within or at the hollow double-plate assembly. Theoretically, the hollow double-plate assembly may comprise one or more further plates in addition to the upper or lower plate, but preferably the hollow double-plate assembly does not contain any further plate in addition to the upper or lower plate.

The present invention is not particularly restricted concerning the relative orientation of the upper plate and the lower plate of the hollow double-plate assembly. Preferably, the upper plate and the lower plate are arranged at least substantially parallel to each other. At least substantially parallel to each other means in accordance with the present invention that the upper plate and the lower plate are not inclined in relation to each other by more than 10°, preferably by not more than 5°, more preferably by not more than 2° and still more preferably by not more than 1 °. Most preferably, the upper plate and the lower plate are arranged parallel to each other, i.e. they are not inclined in relation to each other.

In a further development of the idea of the present invention, it is proposed that the upper plate and the lower plate are connected with each other at their sides through sidewalls, between which the void chamber is defined. Thereby, in an easy manner the void chamber of the hollow double-plate assembly may be fluid-tightly separated from the surroundings.

Concerning the form of the upper plate and of the lower plate, the present invention is not particularly limited. For instance, the upper plate as well as the lower plate may have, seen in top view, a polygonal, a rectangular, a square, a circular, an oval or a trapezoidal form. However, it is preferred that the upper plate and the lower plate both have the same form. Most preferably, the upper plate as well as the lower plate have, seen in top view, a rectangular form or at least substantially a rectangular form.

Also concerning the material of the upper plate and of the lower plate no particular restrictions exist, as long as the material has a comparable good heat conductivity and as long as it is resistant to the composition to be devolatilized and mechanically stable. Good results are in particular obtained, when each the upper plate and of the lower plate is made from stainless steel, carbon steel or the like.

The preferred thickness of the upper plate and of the lower plate depend on the mechanical stability of the material, from which the upper plate and the lower plate are made, wherein the thickness is preferably as low as possible so as to have a fast and efficient heat conduction from the heat medium flowing through the hollow space of the void chamber through the plate. In view of this, it is preferred that the upper plate and the lower plate each have a thickness of 1 to 10 mm and preferably of 3.5 to 6 mm.

In accordance with the present invention, each of the openings of the upper plate is surrounded - at its lower side - by a wall extending through the void chamber and surrounding an opening of the lower plate - at its upper side - so as to form a plurality of channels so that each of the channels fluidly connects an opening of the upper plate with an opening of the lower plate, thus allowing composition to be devolatilized to flow form the upper plate through the channels to the lower plate and fall from there in form of falling strands downwardly. In view of this, it is preferred that the upper plate and the lower plate have the same number of openings.

In a further development of the idea of the present invention, it is suggested that the total area of all openings of the upper plate is 0.1 to 40% and preferably 1 to 10% of the total surface area of the upper plate and that the total area of all openings of the lower plate is 0.1 to 40% and preferably 1 to 10% of the total surface area of the lower plate. Thereby, on the one hand enough non-perforated surface is present on the upper side of the upper plate so as to precisely heat the composition to be devolatilized to the desired optimal temperature and on the other hand enough opening area is present so that a sufficient amount of the composition may flow through the channels downwardly and leave the hollow double-plate assembly as falling strands.

The present invention is not particularly restricted concerning the form of the channels. They may or may not have the same form as the openings and they may or may not have a constant cross-sectional area over their length, i.e. seen in the vertical direction. However, good results are in particular obtained, when the channels have at least substantially same form as the openings and when they have an at least substantially constant cross-sectional area over their length.

Likewise to this, the present invention is not particularly limited concerning the cross-sectional form of the openings. For instance, some or preferably all of the openings of the upper plate and of the lower plate may have a polygonal, a rectangular, a square, a circular, an oval or a trapezoidal cross-sectional form. More preferably, at least some and most preferably all of the openings of the upper plate and of the lower plate have a circular cross-sectional form. In view of this, it is preferred that the openings of the upper plate and of the lower plate have a circular cross-sectional form, wherein at least 50%, preferably at least 80%, more preferably at least 95% and most preferably all of the openings of the upper plate and of the lower plate have at least substantially the same diameter. At least substantially the same diameter means in this connection that any of the openings has a diameter differing by not more than 20%, preferably by not more than 10%, more preferably by not more than 5% and most preferably by not more than 1% from the average diameter of all openings. Most preferably all openings have the same diameter. The average diameter of all openings is the sum of the diameters of all openings of the upper and lower plates divided by the total number of all openings of the upper and lower plates. In other words, it is most preferred that the channels have a cylindrical form with, seen in their length direction, an at least substantially constant diameter and most preferably a constant diameter. In this case the diameter of an opening of the upper plate has the same diameter than the respective opening of the lower plate, which is connected with the opening of the upper plate via the wall. However, if the openings have a different form than a circular cross-sectional form, such as a rectangular cross-sectional form, then preferably at least 50%, preferably at least 80%, more preferably at least 95% and most preferably all of the openings of the upper plate and of the lower plate have at least substantially the same cross-sectional area, wherein at least substantially the same cross-sectional area means that any of the openings has a cross-sectional area differing by not more than 20%, preferably by not more than 10%, more preferably by not more than 5% and most preferably by not more than 1% from the average cross-sectional area of all openings.

In accordance with a further preferred embodiment of the present invention, the average longest dimension of the openings 5 to 50 mm or 20 to 80 mm or 50 to 150 mm. Longest dimension of an opening means the longest possible line connecting a point of the circumferential line of the opening with a point being located on the circumferential line on the opposite side of the opening. More preferably, the openings of the upper plate and of the lower plate have a circular cross-sectional form, wherein the average diameter of the openings is 5 to 50 mm or 20 to 80 mm or 50 to 150 mm. The preferred diameter depends on the viscosity of the composition to be devolatilized and flowing through the openings. For instance, an average longest dimension or average diameter, respectively, of the openings of 5 to 50 mm is preferred, if the viscosity of composition to be devolatilized is 10 to 1,000 Pa.s, whereas an average longest dimension or average diameter, respectively, of the openings of 20 to 80 mm is preferred, if the viscosity of composition to be devolatilized is more than 1,000 to less than 5,000 Pa.s, and an average longest dimension or average diameter, respectively, of the openings of 50 to 150 mm is preferred, if the viscosity of composition to be devolatilized is 5,000 to 10,000 Pa.s.

The function of the hollow space of the void chamber of the hollow double-plate assembly is to precisely and homogeneously temperate the composition to be devolatilized flowing over the upper plate and through the channels from the upper to the lower plate by means of the heat medium, which is introduced into the hollow space of the void chamber through the inlet for heat medium, pressed through the hollow space and is withdrawn from the hollow space through the outlet for heat medium. In order to have a sufficient volume for the heat medium to precisely and homogeneously temperate the upper plate, the lower plate and the walls of the channels and to thereby precisely and homogeneously temperate by means of the heat medium the composition to be devolatilized flowing over the upper plate and through the channels from the upper to the lower plate, it is preferred that the height of the hollow space of the void chamber is 2 to 20 mm, more preferably 4 to 12 mm and most preferably between 6 and 8 mm. The height of the hollow space is the distance between the lower side of the upper plate and the upper side of the lower plate. If the upper plate and the lower plate are not parallel to each other, the height of the hollow space is the average distance between the lower side of the upper plate and the upper side of the lower plate, wherein the average distance is the sum of the distances of heights of adjacent vertical sections of the hollow space divided by the number of adjacent vertical sections.

The present invention is not particularly restricted concerning the form of the inlet for heat medium and of the outlet for heat medium being connected with the hollow space of the void chamber of the hollow double-plate assembly. For instance, each of the inlet as well as of the outlet is a line and preferably a pipe, which extends through an opening of a sidewall surrounding the void chamber into the hollow space. Both, the inlet as well as of the outlet may be arranged on one side of the hollow double-plate assembly or on opposite sides of the hollow double-plate assembly. Alternatively, each of the inlet as well as of the outlet is a line and preferably a pipe, which extends through an opening of the upper plate or of the lower plate into the hollow space. Still alternatively, one of the inlet and of the outlet is a line and preferably a pipe, which extends through an opening of a sidewall surrounding the void chamber into the hollow space, whereas the other of the inlet and of the outlet is a line and preferably a pipe, which extends through an opening of the upper plate or of the lower plate into the hollow space.

In order to achieve a homogenous distribution of the heating medium in the hollow space of the void chamber, it is preferred that one or more, more preferably one to ten and still more preferably two to five at least substantially vertically arranged baffles are arranged in the hollow space of the void chamber and extend over a part of the hollow space so as to guide the heat medium in the hollow space of the void chamber. At least substantially vertically means in this connection that the angle between the baffle and the vertical direction is at most 10°, preferably at most 5°, more preferably at most 1° and most preferably 0°. Good results are in particular obtained, when the baffles are preferably arranged at least substantially perpendicular to the length axis of the hollow double-plate assembly. At least substantially perpendicular means in this connection that the angle between a baffle and the length direction of the hollow double-plate assembly is 80 to 100°, preferably 85 to 95°, more preferably at most 89 to 91 ° and most preferably 90°. In a preferred embodiment, at least some of the neighboring baffles are each extended from the opposite sidewalls of the void chamber in a direction being substantially perpendicular to the length axis of the hollow double-plate assembly. In a further preferred embodiment, all of the neighboring baffles are each extended from the opposite sidewalls of the void chamber in a direction being substantially perpendicular to the length axis of the hollow double-plate assembly.

In accordance with the present invention, at least a section of at least one heatable tray and/or of at least one heatable distributor comprises the aforementioned hollow double-plate assembly. It is preferred that, seen in the horizontal plane, at least 50%, more preferably at least 80%, still more preferably at least 90%, yet more preferably at least 95% and most preferably all of the area of the heatable tray and/or of at least one heatable distributor is formed of the hollow double-plate assembly.

Alternatively, at least one heatable distributor comprises an upstream end and a downstream end, wherein a hollow double-plate assembly embodied as described above is arranged at or before the downstream end. Moreover, it is preferred that the upstream end of the at least one heatable distributor is connected with the inlet for the composition to be devolatilized.

If the heatable tray and/or heatable distributor exceeds a certain size, it is not practical anymore to produce the heatable tray and/or heatable distributor from one hollow double-plate assembly, but to produce the heatable tray and/or heatable distributor from more than one hollow double-plate assembly. In view of this, the at least one heatable tray and/or of at least one heatable distributor comprises preferably 1 to 10, more preferably 2 to 5 and most preferably 2 to 4, such as 3, of the aforementioned hollow double-plate assemblies. If the at least one heatable tray and/or of at least one heatable distributor comprises more than one hollow double-plate assembly, the two or more hollow double-plate assemblies are preferably arranged side by side. For instance, adjacent double-plate assemblies are connected with each other by welding or one or more fasteners. In order to achieve a homogenous distribution of the composition to be devolatilized on the surface of the at least one heatable tray and/or at least one heatable distributor, it is suggested in a further development of the idea of the present invention to arrange an at least substantially vertically extending perforated weir between two adjacent double-plate assemblies, wherein preferably the perforated weir extends over the whole length or width of the at least one heatable tray and/or of at least one heatable distributor so as to allow composition to flow from one hollow double-plate assembly to the adjacent hollow double-plate assembly only via the openings of the perforated weir. For instance, the perforated weir has a height of 20 to 50 mm and preferably of 30 to 40 mm. In a preferred embodiment, the perforated weir also comprises one or more holes allowing one or more fasteners to connect adjacent double-plate assemblies with each other.

Good results are in particular obtained, when the total area of all openings of the perforated weir is 1 to 30% and preferably 10 to 20% of the total surface area of the perforated weir. It is further preferred that the openings of a perforated weir has a circular cross-sectional form, wherein at least 50%, preferably at least 80%, more preferably at least 95% and most preferably all of the openings of the perforated weir have at least substantially the same diameter, wherein at least substantially the same diameter means that the openings have a diameter differing by not more than 20%, preferably by not more than 10%, more preferably by not more than 5% and most preferably by not more than 1% from the average diameter of all openings. For instance, the openings of a perforated weir have a circular cross-sectional form and a diameter of 5 to 30 mm and preferably of 10 to 20 mm.

In order to avoid that composition to be devolatilized flows over the circumferential line of the at least one heatable tray and/or at least one heatable distributor, it is proposed in accordance with a further preferred embodiment of the present invention that the at least one heatable tray and/or of at least one heatable distributor is surrounded by an at least substantially vertically arranged non-perforated weir. Good results are in particular obtained, when the non-perforated weir has a height of 50 to 500 mm and preferably of 100 to 200 mm.

In accordance with a further particularly preferred embodiment of the present invention, the devolatilization apparatus comprises one heatable distributor and 2 to 20, preferably 5 to 15 and more preferably 7 to 12 heatable trays. It is preferred that each of the heatable trays comprises, seen in the horizontal plane, over all of its area one or more of the aforementioned hollow double-plate assemblies. The heatable distributor comprises, seen in the horizontal plane, over all of its area one or more of the aforementioned hollow double-plate assemblies or, alternatively, the heatable distributor comprises at its downstream end or before its downstream end one or more aforementioned hollow double-plate assemblies, whereas the upstream end is embodied differently. Preferably, the upstream end of the distributor is connected with the inlet for the composition to be devolatilized. The distributor may be flanged to the devolatilization apparatus in order to ease the installation and maintenance.

According to still a further preferred embodiment of the present invention, the devolatilization apparatus comprises a cartridge or frame, respectively, which comprises tray support elements, on which the heatable trays are removably or fixedly arranged. For instance, the cartridge may comprise several at least substantially horizontally arranged beams being arranged spaced apart from each other so as to border an inner space, such as preferably a hollow cylindrical inner space. At least substantially horizontally means in this connection that the angle between a beam and the horizontal direction is at most 10°, preferably at most 5°, more preferably at most 1° and most preferably 0°. It is further preferred that support elements are fixed on the beams so that the heatable trays may be placed on the support elements. Preferably, the support elements are annular support elements. The cartridge may further comprise one central inlet line for heating medium and one central outlet line for heating medium, wherein the inlet line for heating medium is connectable to the inlets of the heatable tray(s) and distributor(s) and the outlet line for heating medium is connectable to the outlet of the heatable tray(s) and distributor(s). Thus, all heatable trays share in the cartridge one common inlet and outlet for heat medium so that preferably all of the heatable trays are connected to one heat medium circulating pipe.

Also in the case that the devolatilization apparatus does not comprise a cartridge or frame, respectively, which comprises tray support elements, on which the heatable trays are removably or fixedly arranged, it is preferred that all heatable trays share one common inlet and outlet for heat medium so that preferably all of the heatable trays are connected to one heat medium circulating pipe.

Preferably, the devolatilization apparatus is embodied as static devolatilization apparatus, i.e. it does not comprise moving parts.

In addition, the devolatilization apparatus may comprise a pump for generating a sub-atmospheric pressure inside the vessel during the operation of the devolatilization apparatus.

In a further development of the idea of the present invention, it is suggested that the vessel comprises a central inlet for heating medium as well as a central outlet for heating medium, wherein the inlets for heating medium of the heatable tray(s) and of the distributor(s) are connected via lines with the central inlet for heating medium, and wherein the outlets for heating medium of the heatable tray(s) and of the distributor(s) are connected via lines with the central outlet for heating medium.

In accordance with another aspect, the present invention relates to a heatable tray or heatable distributor, wherein at least a section of the heatable tray or of the heatable distributor comprises a hollow double-plate assembly comprising an upper plate and a lower plate being arranged on top of each other, but spaced apart so that a void chamber is defined therebetween, wherein each of both plates comprises a plurality of openings, wherein each opening of the upper plate is surrounded by a wall extending through the void chamber and surrounding an opening of the lower plate so as to form a plurality of channels being fluid-tightly separated from the hollow space being defined in the void chamber between the channels, wherein the hollow space is connected with an inlet for heat medium and with an outlet for heat medium.

In a further aspect, the present invention relates to a method for devolatilizing a composition comprising a volatile component comprising the steps of feeding the composition into the inlet of the aforementioned devolatilization apparatus, of feeding heating medium into the at least one heatable tray and/or the optional at least one heatable distributor, of withdrawing gas from the outlet for gas and of withdrawing devolatilized composition from the outlet for devolatilized composition.

Preferably, a polymer composition containing monomer(s) and solvent is used as composition to be devolatilized.

For instance, the composition to be devolatilized has a viscosity of 1 to 10,000 Pa.s measured at the devolatilization operational temperature which is defined by the physical properties of different feeding polymer solution, using a rheometer of the plate-plate or of the cone-plate or cylinder type).

The pressure and temperature adjusted during the method within the vessel depends on the specific composition, which is devolatilized. For instance, the pressure within the vessel may be adjusted to 0.1 to 1,500 kPa and preferably 0.1 to 200 kPa, such as 0.5 kPa, 1 kPa, 3 kPa, 5 kPa, 10 kPa, 20 kPa, 50 kPa, 80 kPa, 100 kPa, 200 kPa, 500 kPa, 800 kPa, 1000 kPa or 1300 kPa, and the heating medium in each of the hollow spaces of the hollow double-plate assembly may be adjusted to 40 to 300°C and preferably 70 to 250°C, such as 50°C, 60°C, 70°C, 80°C, 100°C, 130°C, 150°C, 170°C, 190°C, 210°C, 230°C, 250°C, 270°C or 290°C.

Suitable examples for polymer compositions to be devolatilized are compositions based on polyacrylonitrile, polylactic acid, polyolefin, polyolefin elastomer and/or synthetic rubber.

In a further development of the idea of the present invention, it is suggested that in the method a composition is devolatilized, which is a mixture containing i) at least one heat sensitive polymer and/or heat sensitive monomer and ii) at least one heat non-sensitive polymer and/or heat non-sensitive monomer. It is preferred in this embodiment that the method is performed in a devolatilization apparatus comprising in the upper section of the vessel at least one and preferably at least two trays each of which comprising a hollow double-plate assembly and in the lower section of the vessel at least one and preferably at least two trays each of which comprising a hollow double-plate assembly, wherein the hollow double-plate assemblies of the trays installed in the upper section of the vessel are adjusted to a comparable low temperature so as to remove there the heat sensitive component(s), whereas the hollow double-plate assemblies of the trays installed in the lower section of the vessel are adjusted to a higher temperature so as to remove there the heat non-sensitive components).

The method in accordance with the present invention allows to reduce the content of non-polymeric compounds in the polymer composition to less than 600,000 ppm, preferably to less than 200,000 ppm, more preferably to less than 100 ppm and most preferably to less than 10 ppm.

Subsequently, the present patent application is described by way of example with reference to advantageous embodiments and to the enclosed drawings.

There is shown:
- Fig. 1: shows a schematic longitudinal-sectional view of a devolatilization apparatus according one embodiment of the present invention.
- Fig. 2: shows a perspective view of a heatable tray of the devolatilization apparatus shown in figure 1.
- Fig. 3: shows a cross-sectional view of a hollow double-plate assembly of the heatable tray shown in figure 2.
- Fig. 4a and 4b: show a schematic cross-sectional view and a schematic top view of a heatable distributor, which may be included in a devolatilization apparatus according to the present invention.
- Fig. 5: shows a schematic view of a cartridge for holding heatable trays, which may be included in a devolatilization apparatus according to the present invention.

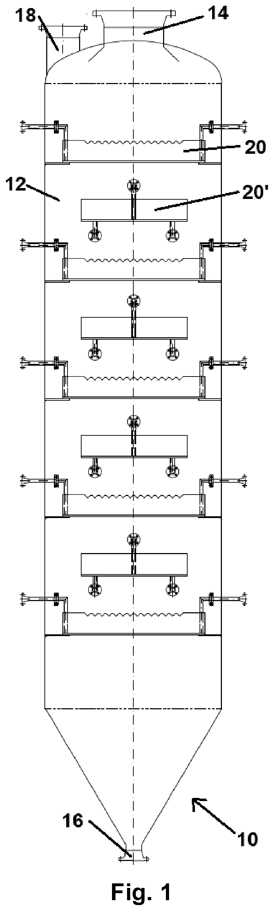

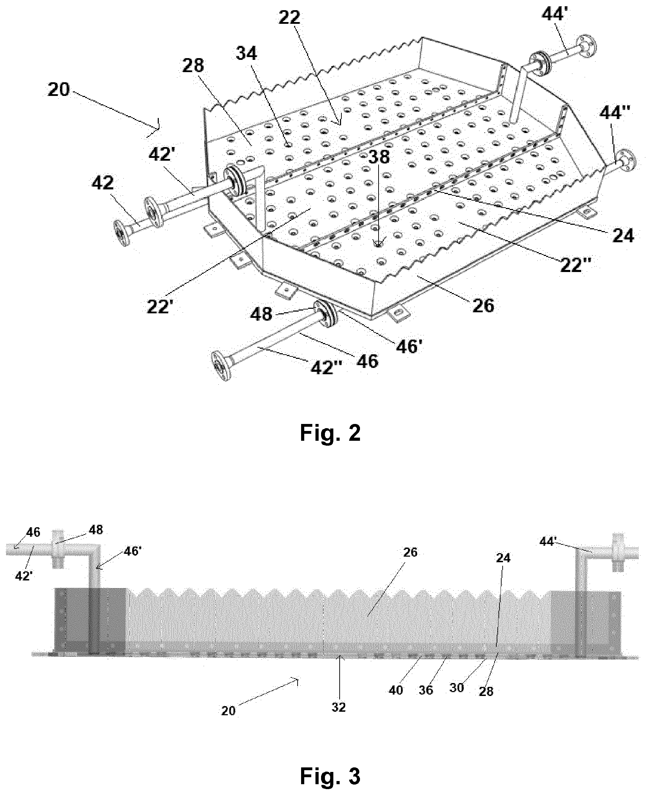

The devolatilization apparatus 10 for devolatilizing a composition comprising a volatile component, such as for devolatilizing a solid or liquid polymer composition comprising non-reacted monomer and solvent, shown in figure 1 comprises a vessel 12 comprising an inlet line 14 for the composition to be devolatilized, an outlet line 16 for devolatilized composition, an outlet line 18 for gas and nine heatable trays 20, 20' being arranged on top of each other, wherein adjacent trays are rotated by 90°. As shown in more detail in figures 2 and 3, each of the heatable trays 20, 20' comprises three hollow double-plate assemblies 22, 22', 22", which are arranged side by side, wherein adjacent hollow double-plate assemblies 22, 22', 22"are welded to each other and between two adjacent hollow double-plate assemblies 22, 22', 22"an at least substantially vertically arranged perforated weir 24 is arranged. At its outer circumference, the trays 20, 20' are surrounded each by a vertically arranged non-perforated weir 26. Each of the hollow double-plate assemblies 22, 22', 22" comprises an upper plate 28, a lower plate 30 being arranged on top of each other, but spaced apart so that a void chamber 32 is defined therebetween. Each of the upper plate 28 and the lower plate 30 comprises a plurality of openings 34, wherein each opening 34 of the upper plate 28 is surrounded by a wall 36 extending through the void chamber 32 and surrounding an opening of the lower plate so as to form a plurality of channels 38 being fluid-tightly separated from the hollow space 40 being defined in the void chamber 32 between the channels 38. Each of the hollow double-plate assemblies 22, 22', 22" comprises an inlet line 42, 42', 42" for heat medium as well as an outlet line 44', 44" for heat medium (only two are shown in figure 2). While the inlet lines 42, 42" for heat medium and the outlet lines 44" for heat medium of the two outer hollow double-plate assemblies 22, 22" enter the two outer hollow double-plate assemblies 22, 22" from below, the inlet line 42' for heat medium and the outlet line 44' for heat medium of the middle hollow double-plate assembly 22' enters the middle hollow double-plate assembly 22' from above. Each inlet line 42, 42', 42" for heat medium as well as each outlet line 44', 44" for heat medium is in fact composed of two pipes 46, 46', which are connected with each other by means of a flange 48 being arranged inside the vessel 12. The alternative arrangement of the inlet lines 42, 42', 42" for heat medium and of the outlet lines 44', 44" for heat medium facilitates the installation. During the installation, the vessel 12 will be laid down horizontally and the hollow double-plate assemblies 22, 22', 22" will be in a vertical position facing the installation worker. The installation worker will install the outermost hollow double-plate assemblies 22, 22" and will connect pipe 46' with pipe 46 of the outermost hollow double-plate assemblies 22, 22" by tightening the flange 48, while the middle hollow double-plate assembly 22' is yet not installed so that there is space in the middle allowing the worker to reach the flange 48 from below. If the inlet line 42' and the outlet line 44' for heat medium would be also connected with the middle hollow double-plate assembly 22' from below, the worker would not be able to connect the two pipes for the middle hollow double-plate assembly 22', but the worker is able to connect the two pipes for the middle hollow double-plate assembly 22' from above.

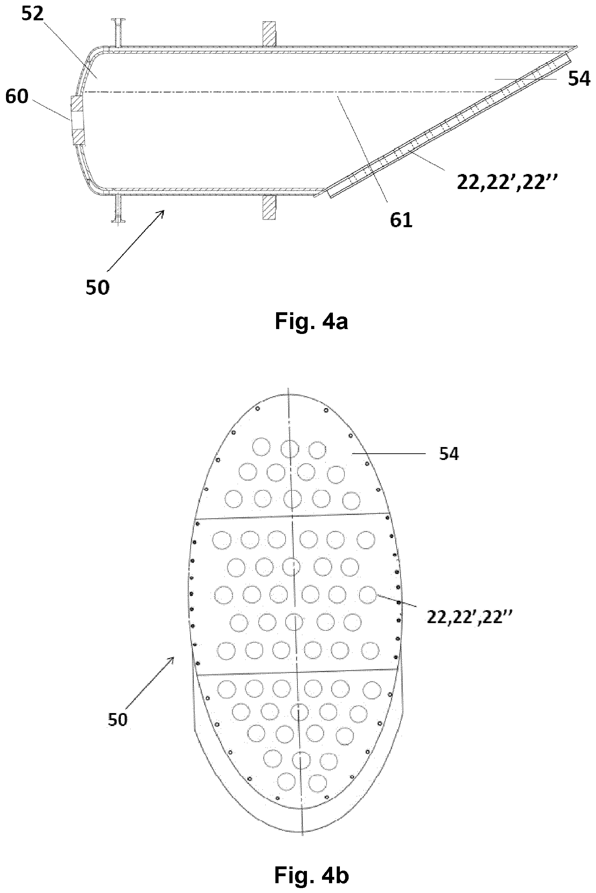

Figures 4a and 4b show a heatable distributor 50, which may be included in a devolatilization apparatus according to the present invention. The heatable distributor 50 comprises an upstream end 52 and a downstream end 54, wherein shortly before the downstream end 54 three hollow double-plate assemblies 22, 22', 22" embodied as described above are arranged. Moreover, at the upstream end 52 of the heatable distributor 50 an inlet line 60 for the composition to be devolatilized is arranged. During the operation of the distributor, the liquid level may reach the broken line 61.

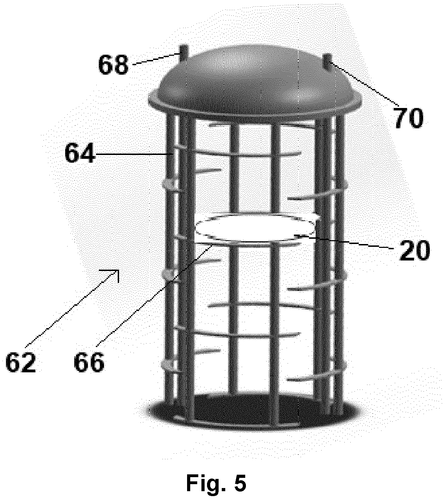

Figure 5 shows a cartridge 62 for holding heatable trays, which may be included in a devolatilization apparatus according to the present invention. The cartridge 62 comprises several horizontally arranged beams 64 being arranged spaced apart from each other so as to border a hollow cylindrical inner space. Several annular tray support elements 66 are fixed at the beams 64 so that heatable trays 20 (only one tray is shown in figure 5) may be removably arranged on the tray support elements 66. Furthermore, the cartridge 62 comprises one central inlet line 68 for heating medium and one central outlet line 70 for heating medium, wherein the inlet line 68 for heating medium is connectable to the inlet lines of the heatable tray(s) 20 and the outlet line 70 for heating medium is connectable to the outlet lines of the heatable tray(s).

### Reference Numeral List

- 10: Devolatilization apparatus
- 12: Vessel
- 14: Inlet line for composition to be devolatilized
- 16: Outlet line for devolatilized composition
- 18: Outlet line for gas
- 20, 20': Heatable tray
- 22, 22', 22": Hollow double-plate assembly
- 24: Perforated weir
- 26: Non-perforated weir
- 28: Upper plate of a hollow double-plate assembly
- 30: Lower plate of a hollow double-plate assembly
- 32: Void chamber of a hollow double-plate assembly
- 34: Opening of an upper or lower plate
- 36: Wall of channel
- 38: Channels of a hollow double-plate assembly
- 40: Hollow space of a hollow double-plate assembly
- 42, 42', 42": Inlet line for heat medium
- 44', 44": Outlet line for heat medium
- 46,46': Pipe
- 48: Flange
- 50: Heatable distributor
- 52: Upstream end of heatable distributor
- 54: Downstream end of heatable distributor
- 60: Inlet line of heatable distributor
- 61: Liquid level during operation of the distributor
- 62: Cartridge
- 64: Beam of the cartridge
- 66: Tray support element of the cartridge
- 68: Central inlet line of the cartridge
- 70: Central outlet line of the cartridge

## Claims

1. A devolatilization apparatus for devolatilizing a composition comprising a volatile component, such as for devolatilizing a solid or liquid polymer composition comprising non-reacted monomer, solvent and/or by-product, wherein the devolatilization apparatus comprises a vessel comprising at least one inlet for the composition to be devolatilized, at least one outlet for devolatilized composition, at least one outlet for gas, at least one heatable tray and optionally at least one heatable distributor, wherein at least a section of at least one heatable tray and/or of at least one heatable distributor comprises a hollow double-plate assembly comprising an upper plate and a lower plate being arranged on top of each other, but spaced apart so that a void chamber is defined therebetween, wherein each of both plates comprises a plurality of openings, wherein each opening of the upper plate is surrounded by a wall extending through the void chamber and surrounding an opening of the lower plate so as to form a plurality of channels being fluid-tightly separated from the hollow space being defined in the void chamber between the channels, wherein the hollow space is connected with an inlet for heat medium and with an outlet for heat medium.

2. The devolatilization apparatus in accordance with claim 1, wherein the upper plate and the lower plate are arranged at least substantially parallel to each other, and, wherein the upper plate and the lower plate are connected with each other at their sides through sidewalls, between which the void chamber is defined.

3. The devolatilization apparatus in accordance with claim 1 or 2, wherein the upper plate and the lower plate have the same number of openings, wherein preferably the total area of all openings of the upper plate is 0.1 to 40% and preferably 1 to 10% of the total surface area of the upper plate and the total area of all openings of the lower plate is 0.1 to 40% and preferably 1 to 10% of the total surface area of the lower plate.

4. The devolatilization apparatus in accordance with any of the preceding claims, wherein the openings of the upper plate and of the lower plate have a circular cross-sectional form, wherein at least 50%, preferably at least 80%, more preferably at least 95% and most preferably all of the openings of the upper plate and of the lower plate have at least substantially the same diameter, wherein at least substantially the same diameter means that any of the openings has a diameter differing by not more than 20%, preferably by not more than 10%, more preferably by not more than 5% and most preferably by not more than 1% from the average diameter of all openings.

5. The devolatilization apparatus in accordance with any of the preceding claims, wherein the height of the hollow space of the void chamber is 2 to 20 mm, preferably 4 to 12 mm and more preferably between 6 and 8 mm.

6. The devolatilization apparatus in accordance with any of the preceding claims, wherein the upper plate and the lower plate are connected with each other at their sides through sidewalls, between which the void chamber is defined, wherein the inlet for heat medium and the outlet for heat medium are pipes, which extend through one or two of the sidewalls.

7. The devolatilization apparatus in accordance with any of the preceding claims, wherein, seen in the horizontal plane, at least 50%, more preferably at least 80%, still more preferably at least 90%, yet more preferably at least 95% and most preferably all of the area of the heatable tray and/or of at least one heatable distributor is formed of the hollow double-plate assembly.

8. The devolatilization apparatus in accordance with any of the preceding claims, wherein at least one heatable distributor comprises an upstream end and a downstream end, wherein a hollow double-plate assembly is arranged at or before the downstream end, and wherein preferably the upstream end is connected with the inlet for the composition to be devolatilized.

9. The devolatilization apparatus in accordance with any of the preceding claims, wherein the at least one heatable tray and/or of at least one heatable distributor comprises 1 to 10, preferably 2 to 5 and more preferably 2 to 4 hollow double-plate assemblies, wherein the at least one heatable tray and/or of at least one heatable distributor comprises at least two hollow double-plate assemblies being arranged side by side, wherein preferably between two adjacent hollow double-plate assemblies an at least substantially vertically arranged perforated weir is arranged.

10. The devolatilization apparatus in accordance with any of the preceding claims, which comprises one heatable distributor and 2 to 20, preferably 5 to 15 and more preferably 7 to 12 heatable trays, wherein each of the heatable trays comprises, seen in the horizontal plane, over all of its area one or more hollow double-plate assemblies, and wherein the heatable distributor comprises at least at its downstream end or before its downstream end one or more hollow double-plate assemblies.

11. The devolatilization apparatus in accordance with any of the preceding claims, which comprises a cartridge comprising tray support elements, on which the heatable trays are removably or fixedly arranged, wherein the cartridge preferably comprises several at least substantially horizontally arranged beams being arranged spaced apart from each other so as to border an inner space, wherein support elements are fixed on the beams so that the heatable trays may be placed on the support elements.

12. The devolatilization apparatus in accordance with claim 11, wherein the cartridge further comprises one central inlet line for heating medium and one central outlet line for heating medium, wherein the inlet line for heating medium is connectable to the inlets of the heatable tray(s) and distributor(s) and the outlet line for heating medium is connectable to the outlet of the heatable tray(s) and distributor(s).

13. A heatable tray or heatable distributor, wherein at least a section of the heatable tray or of the heatable distributor comprises a hollow double-plate assembly comprising an upper plate and a lower plate being arranged on top of each other, but spaced apart so that a void chamber is defined therebetween, wherein each of both plates comprises a plurality of openings, wherein each opening of the upper plate is surrounded by a wall extending through the void chamber and surrounding an opening of the lower plate so as to form a plurality of channels being fluid-tightly separated from the hollow space being defined in the void chamber between the channels, wherein the hollow space is connected with an inlet for heat medium and with an outlet for heat medium.

14. A method for devolatilizing a composition comprising a volatile component comprising the steps of feeding the composition into the inlet of the devolatilization apparatus in accordance with any of claims 1 to 12, of feeding heating medium into the at least one heatable tray and/or the optional at least one heatable distributor, of withdrawing gas from the outlet for gas and of withdrawing devolatilized composition from the outlet for devolatilized composition.

15. The method in accordance with claim 14, wherein a composition is devolatilized, which is a mixture containing i) at least one heat sensitive polymer and/or heat sensitive monomer and ii) at least one heat non-sensitive polymer and/or heat non-sensitive monomer, wherein the method is performed in a devolatilization apparatus comprising in the upper section of the vessel at least one and preferably at least two trays each of which comprising a hollow double-plate assembly and in the lower section of the vessel at least one and preferably at least two trays each of which comprising a hollow double-plate assembly, wherein the hollow double-plate assemblies of the trays installed in the upper section of the vessel are adjusted to a comparable low temperature so as to remove there the heat sensitive component(s), whereas the hollow double-plate assemblies of the trays installed in the lower section of the vessel are adjusted to a higher temperature so as to remove there the heat non-sensitive component(s).
